# EUROPEAN PATENT SPECIFICATION

(11) **EP 3 730 743 B1**
(45) Date of publication and mention of the grant of the patent: **30.03.2022**
(21) Application number: 20177262.1
(22) Date of filing: 05.02.2018
(51) Int. Cl.: F01D 9/06, F01D 25/18, F02C 7/06

(54) **MULTIWALL TUBE AND FITTING FOR BEARING OIL SUPPLY**
MEHRWANDIGES ROHR UND ROHRVERBINDUNG FÜR LAGERÖLVERSORGUNG
TUBE À PAROIS MULTIPLES ET RACCORD POUR L'ALIMENTATION EN HUILE DE PALIER

(30) Priority: 06.02.2017 US 201715425337
(43) Date of publication of application: 28.10.2020
(62) Divisional of application: 18155144.1
(73) Proprietor: Raytheon Technologies Corporation, Farmington, CT 06032 (US)
(72) Inventor: HENDRICKSON, Timothy R., West Hartford, CT Connecticut 06107 (US)
(74) Representative: Dehns

(56) References cited:
- US-A1- 2013 189 071
- US-A1- 2015 219 011
- US-A1- 2015 354 382

## Description

### FIELD

The present disclosure relates to gas turbine engines and, more particularly, to lubricant transport for bearing systems of gas turbine engine.

### BACKGROUND

Gas turbine engines typically include a fan section, a compressor section, a combustor section and a turbine section. A fan section may drive air along a bypass flowpath while a compressor section may drive air along a core flowpath. In general, during operation, air is pressurized in the compressor section and is mixed with fuel and burned in the combustor section to generate hot combustion gases. The hot combustion gases flow through the turbine section, which extracts energy from the hot combustion gases to power the compressor section and other gas turbine engine loads. The compressor section typically includes low pressure and high pressure compressors, and the turbine section includes low pressure and high pressure turbines.

Gas turbine engines generally include one or more bearing systems that support rotation of various components relative to an engine static structure or engine case. Gas turbine engines may use oil for cooling and lubrication of the bearing systems. Lubrication systems, such as those used in aircraft gas turbine engines, supply lubricant to bearings, gears and other engine components that use lubrication. The lubricant, typically oil, cools the components and protects them from wear. A typical oil lubrication system includes conventional components such as an oil tank, pump, filter and oil supply conduits. Tubing and conduits of various types can be used to route fluids throughout an engine, for example. Various double wall tubes may be used for delivery and transport of fluids, such as oil. A double wall tube may have an outer passage formed between an inner tube and an outer tube. The inner tube and the outer tube may each carry a fluid, and it may be difficult to maintain separation of the fluids at the exit of a double wall tube. Further, engine oil tubes and fittings may be subjected to relatively high temperatures. Once subjected to excessive heating, oil may undergo coking. Oil coking may cause solid oil deposits to form within oil tubes, causing undesirable effects such as blocked passageways and filters.

US 2015/219011 A1 discloses a dual oil supply tube for a gas turbine engine.

US 2013/189071 A1 discloses an oil purge system for a mid-turbine frame of a gas turbine engine having an oil transfer tube surrounded by a heat shield tube.

### SUMMARY

From a first aspect of the invention, a multiwall tubing assembly as claimed in claim 1 is provided.

In various embodiments, the outer fluid passage may be concentric with the inner fluid passage. The fitting may be configured to couple to a bearing housing of the bearing system with the inner fluid passage in fluid communication with a bearing damper path defined by the bearing housing, and with the outer fluid passage in fluid communication with a bearing compartment path defined by the bearing housing. A pressure of the first fluid may be greater than a pressure of the second fluid. The outer portion of the fitting may define a first aperture disposed through a sidewall of the outer portion. The outer portion of the fitting may comprise a frustoconical portion. The inner portion of the fitting may comprise a tubular portion.

From a further aspect of the invention, a mid-turbine frame for a gas turbine engine as claimed in claim 4 is also provided.

In various embodiments, the outer fluid passage may be concentric with the inner fluid passage. The bearing system may further comprise a bearing damper and a bearing chamber. The bearing housing may define a bearing damper path and a bearing chamber path. The inner fluid passage may be in fluid communication with the bearing damper path. The outer fluid passage may be in fluid communication with the bearing chamber path. The outer portion of the fitting may define an aperture disposed through a sidewall of the outer portion. The outer portion of the fitting may comprise a frustoconical portion. The inner portion of the fitting may comprise a tubular portion. A seal may be disposed between the bearing housing and the fitting. The seal may be configured to maintain fluid isolation of the first fluid from the second fluid.

From a still further aspect of the invention, a method of delivering lubricant to a bearing system as claimed in claim 11 is also provided.

In various embodiments, the method may further comprise the step of delivering the second fluid through the second fluid path to the bearing system during engine startup. A pressure of the first fluid during engine startup may be greater than a pressure of the second fluid during engine startup. The method may further comprise the step of coupling the fitting to a bearing housing. The first fluid path may be in fluid communication with a bearing damper path defined by the bearing housing. The second fluid path may be in fluid communication with a bearing compartment path defined by the bearing housing. The step of delivering the first fluid may further comprise delivering the first fluid to a bearing damper. The step of delivering the second fluid may further comprise delivering the second fluid to a bearing compartment.

The foregoing features and elements may be combined in various combinations without exclusivity, unless expressly indicated otherwise. These features and elements as well as the operation thereof will become more apparent in light of the following description and the accompanying drawings. It should be understood, however, the following description and drawings are intended to be exemplary in nature and non-limiting.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the detailed description and claims when considered in connection with the figures, wherein like numerals denote like elements.
FIG. 1 illustrates a cross-sectional view of an exemplary gas turbine engine;
FIG. 2 illustrates a cross-sectional view of a turbine section with a mid-turbine frame and an oil supply tube;
FIG. 3 illustrates a cross-sectional view of a multiwall tubing assembly and bearing compartment;
FIGS. 4A and 4B illustrate a cross-sectional view and a perspective view, respectively, of a multiwall tubing assembly, in accordance with various embodiments;
FIGS. 5A and 5B illustrate perspective views of a fitting for a multiwall tube, in accordance with various embodiments;
FIG. 6 illustrates a side view of a fitting for a multiwall tube, in accordance with various embodiments;
FIG. 7 illustrates a top view of a fitting for a multiwall tube, in accordance with various embodiments;
FIGS. 8A and 8B illustrate a side view and a perspective view of a fitting for a multiwall tube, in accordance with various embodiments; and
FIG. 9 illustrates a method for delivering lubricant to a bearing system.

### DETAILED DESCRIPTION

All ranges and ratio limits disclosed herein may be combined. It is to be understood that unless specifically stated otherwise, references to "a," "an," and/or "the" may include one or more than one and that reference to an item in the singular may also include the item in the plural.

The detailed description of various embodiments herein makes reference to the accompanying drawings, which show various embodiments by way of illustration. While these various embodiments are described in sufficient detail to enable those skilled in the art to practice the disclosure, it should be understood that other embodiments may be realized and that logical, chemical, and mechanical changes may be made without departing from the scope of the disclosure. Thus, the detailed description herein is presented for purposes of illustration only and not of limitation. For example, the steps recited in any of the method or process descriptions may be executed in any order and are not necessarily limited to the order presented. Furthermore, any reference to singular includes plural embodiments, and any reference to more than one component or step may include a singular embodiment or step. Also, any reference to attached, fixed, connected, or the like may include permanent, removable, temporary, partial, full, and/or any other possible attachment option. Additionally, any reference to without contact (or similar phrases) may also include reduced contact or minimal contact. Cross hatching lines may be used throughout the figures to denote different parts but not necessarily to denote the same or different materials.

As used herein, "aft" refers to the direction associated with the exhaust (e.g., the back end) of a gas turbine engine. As used herein, "forward" refers to the direction associated with the intake (e.g., the front end) of a gas turbine engine.

The present disclosure relates to fittings for double wall tubes and multiwall tubes. A multiwall tube may define two or more concentric fluid paths. For example, an inner tube may define a first fluid path. A second fluid path may be defined between the inner tube and an outer tube. It may be desirable to fluidly isolate the first fluid path from the second fluid path. A fitting may join an end of an inner tube with an end of an outer tube, while maintaining separation of the fluid paths.

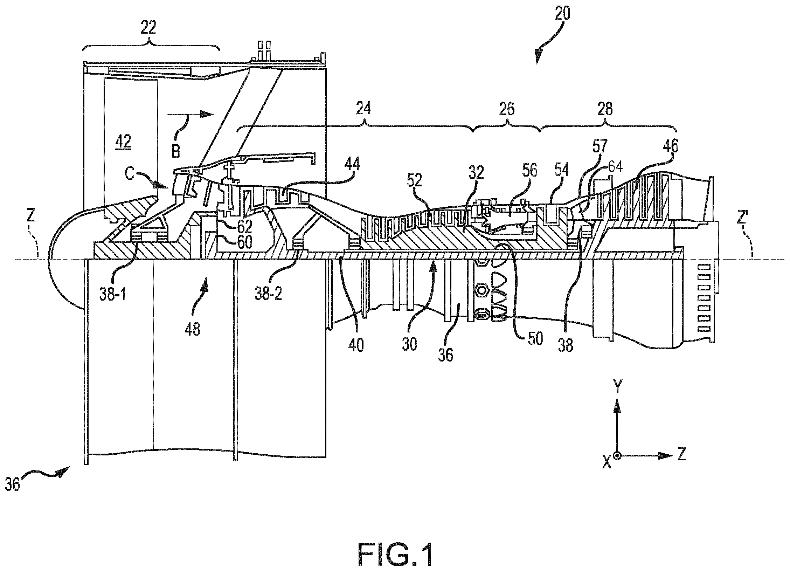

In various embodiments and with reference to FIG. 1, a gas turbine engine 20 is provided. Gas turbine engine 20 may be a two-spool turbofan that generally incorporates a fan section 22, a compressor section 24, a combustor section 26 and a turbine section 28. Alternative engines may include, for example, an augmentor section among other systems or features. In operation, fan section 22 can drive coolant (e.g., air) along a bypass flow path B while compressor section 24 can drive coolant along a core flow path C for compression and communication into combustor section 26 then expansion through turbine section 28. Although depicted as a turbofan gas turbine engine 20 herein, it should be understood that the concepts described herein are not limited to use with turbofans as the teachings may be applied to other types of turbine engines including three-spool architectures.

Gas turbine engine 20 may generally comprise a low speed spool 30 and a high speed spool 32 mounted for rotation about an engine central longitudinal axis Z-Z' relative to an engine static structure 36 or engine case via several bearing systems 38, 38-1, and 38-2. Engine central longitudinal axis Z-Z' is oriented in the z direction on the provided xyz axes. It should be understood that various bearing systems 38 at various locations may alternatively or additionally be provided, including for example, bearing system 38, bearing system 38-1, and bearing system 38-2.

Low speed spool 30 may generally comprise an inner shaft 40 that interconnects a fan 42, a low pressure compressor 44 and a low pressure turbine 46. Inner shaft 40 may be connected to fan 42 through a geared architecture 48 that can drive fan 42 at a lower speed than low speed spool 30. Geared architecture 48 may comprise a gear assembly 60 enclosed within a gear housing 62. Gear assembly 60 couples inner shaft 40 to a rotating fan structure. High speed spool 32 may comprise an outer shaft 50 that interconnects a high pressure compressor 52 and high pressure turbine 54. A combustor 56 may be located between high pressure compressor 52 and high pressure turbine 54. A mid-turbine frame 57 of engine static structure 36 may be located generally between high pressure turbine 54 and low pressure turbine 46. Mid-turbine frame 57 may support one or more bearing systems 38 in turbine section 28. Inner shaft 40 and outer shaft 50 may be concentric and rotate via bearing systems 38 about the engine central longitudinal axis Z-Z', which is collinear with their longitudinal axes. As used herein, a "high pressure" compressor or turbine experiences a higher pressure than a corresponding "low pressure" compressor or turbine.

The airflow of core flow path C may be compressed by low pressure compressor 44 then high pressure compressor 52, mixed and burned with fuel in combustor 56, then expanded over high pressure turbine 54 and low pressure turbine 46. Mid-turbine frame 57 may include airfoils 64, which are in core flow path C. Turbines 46, 54 rotationally drive the respective low speed spool 30 and high speed spool 32 in response to the expansion.

Gas turbine engine 20 may be, for example, a high-bypass ratio geared engine. In various embodiments, the bypass ratio of gas turbine engine 20 may be greater than about six (6). In various embodiments, the bypass ratio of gas turbine engine 20 may be greater than ten (10). In various embodiments, geared architecture 48 may be an epicyclic gear train, such as a star gear system (sun gear in meshing engagement with a plurality of star gears supported by a carrier and in meshing engagement with a ring gear) or other gear system. Geared architecture 48 may have a gear reduction ratio of greater than about 2.3 and low pressure turbine 46 may have a pressure ratio that is greater than about five (5). In various embodiments, the bypass ratio of gas turbine engine 20 is greater than about ten (10:1). In various embodiments, the diameter of fan 42 may be significantly larger than that of the low pressure compressor 44, and the low pressure turbine 46 may have a pressure ratio that is greater than about five (5:1). Low pressure turbine 46 pressure ratio may be measured prior to inlet of low pressure turbine 46 as related to the pressure at the outlet of low pressure turbine 46 prior to an exhaust nozzle. It should be understood, however, that the above parameters are exemplary of various embodiments of a suitable geared architecture engine and that the present disclosure contemplates other gas turbine engines including direct drive turbofans. A gas turbine engine may comprise an industrial gas turbine (IGT) or a geared engine, such as a geared turbofan, or non-geared engine, such as a turbofan, a turboshaft, or may comprise any gas turbine engine as desired.

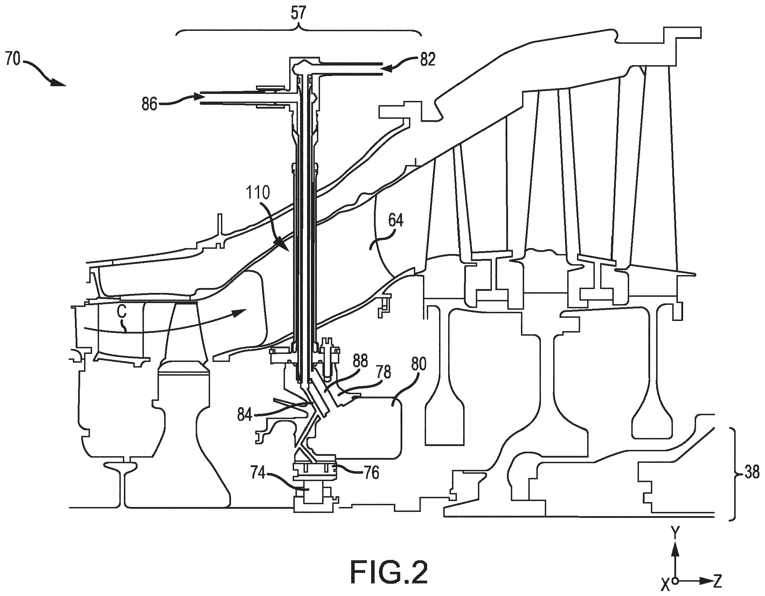

With reference now to FIG. 2 and still to FIG. 1, a portion of an engine section 70 is shown. Although engine section 70 is illustrated in FIG. 2, for example, as a turbine section, it will be understood that the tubing assemblies in the present disclosure are not limited to the turbine section, and could extend to other sections of the gas turbine engine 20 and to other bearing assemblies. In various embodiments, engine section 70 may include mid-turbine frame 57 of gas turbine engine 20. Mid-turbine frame 57 may be located aft of high pressure turbine 54 and forward of low pressure turbine 46 and may be mechanically coupled to bearing system 38.

In various embodiments, mid-turbine frame 57 may include a bearing 74, a bearing damper 76, and a bearing housing 78, which may define a bearing compartment 80. Mid-turbine frame 57 may include a multiwall tubing assembly 110 for fluid delivery to bearing system 38. Multiwall tubing assembly 110 may be coupled to bearing housing 78 and may be configured to transport fluid to and/or from bearing compartment 80 and bearing damper 76. For example, multiwall tubing assembly 110 may deliver a first fluid from a first fluid source 82 to bearing damper 76 through a bearing damper path 84 defined by bearing housing 78. The first fluid may be used to lubricate bearing damper 76. Multiwall tubing assembly 110 may deliver a second fluid from a second fluid source 86 to bearing compartment 80 through a bearing compartment path 88 defined by bearing housing 78. The second fluid may be used to lubricate at least a portion of bearing compartment 80.

Multiwall tubing assembly 110 may extend through airfoil 64. Hot exhaust gas in core flow path C may impinge on airfoil 64 which may cause airfoil 64 to increase in temperature due to convective heat transfer from the hot exhaust. In various embodiments, heat may radiate to other nearby components which may cause the nearby components to increase in temperature. In return, the nearby components may transfer heat to other adjacent components and/or fluids. For example, heat may radiate from airfoil 64 to multiwall tubing assembly 110 and may convectively transfer heat from airfoil 64 to multiwall tubing assembly 110. Multiwall tubing assembly 110 may be configured to limit heat transfer to the fluids within multiwall tubing assembly 110.

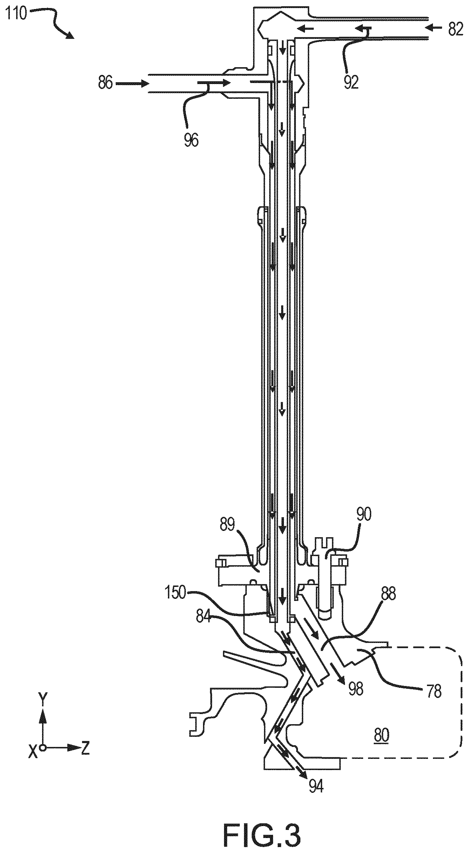

Referring to FIG. 3, a multiwall tubing assembly 110 and bearing housing 78 is shown. Multiwall tubing assembly 110 may be coupled to bearing housing 78 by one or more fittings 89 and/or fasteners 90 configured to secure multiwall tubing assembly 110 to bearing housing 78. Multiwall tubing assembly 110 may further include a fitting 150 coupled to bearing housing 78 and to fitting 89. Multiwall tubing assembly 110 with fitting 150 may be configured to deliver a first fluid 92 from first fluid source 82 to bearing damper path 84. First fluid 92 flows through multiwall tubing assembly 110, fitting 150 and bearing damper path 84 and to bearing damper 76 (FIG. 2) through a first outlet 94 in bearing housing 78. Multiwall tubing assembly 110 and fittings 89, 150 may further be configured to deliver a second fluid 96 from second fluid source 86 to bearing compartment path 88. Second fluid 96 flows through multiwall tubing assembly 110, fitting 89, fitting 150 and bearing compartment path 88 and to bearing compartment 80 through a second outlet 98 in bearing housing 78. Multiwall tubing assembly 110 with fitting 150 may be configured to maintain first fluid 92 separated from second fluid 96. First fluid 92 and second fluid 96 may contain similar or different fluids, which may have similar or different temperatures and/or pressures.

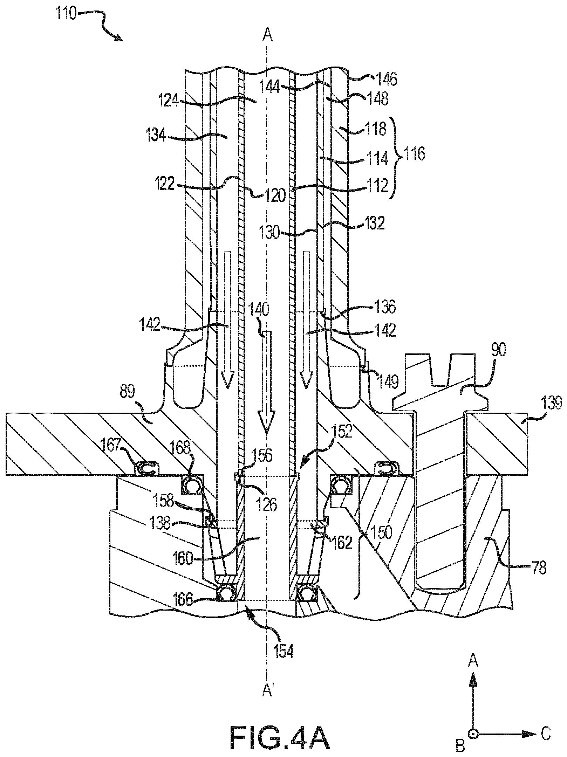

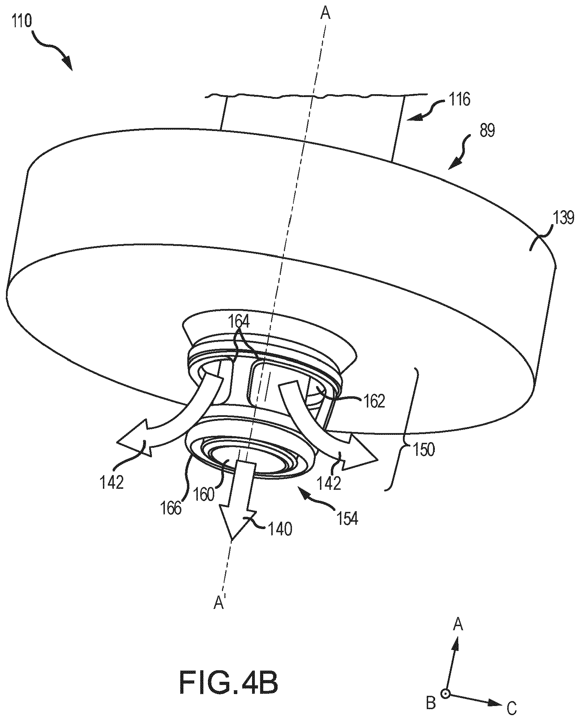

Referring to FIGS. 4A and 4B, a multiwall tubing assembly 110 is shown, in accordance with various embodiments. Multiwall tubing assembly 110 includes a first tube 112 disposed within a second tube 114. Second tube 114 may be disposed around first tube 112 in a concentric and/or coaxial arrangement. First tube 112 and second tube 114 together may form at least a portion of a multiwall tube 116. Multiwall tube 116 further includes third tube 118. First tube 112 and second tube 114 may be disposed within third tube 118. In various embodiments, third tube 118 may comprise an outer sleeve that encases at least a portion of second tube 114. Third tube 118 may be configured to prevent heat transfer from surrounding hot air to second tube 114 and/or first tube 112.

In various embodiments, first tube 112, second tube 114 and third tube 118 may be concentric about a longitudinal axis A-A', which is collinear with the longitudinal axes of first tube 112, second tube 114 and third tube 118 and which is parallel to the A-direction on the provided ABC axes. First tube 112 may include an inner surface 120 and an outer surface 122. First tube 112 may include an inner fluid passage 124 defined by inner surface 120. Second tube 114 may include an inner surface 130 and an outer surface 132. An outer fluid passage 134 may be defined between first tube 112 and second tube 114. Outer fluid passage 134 may have a generally annular cross section. Each of inner fluid passage 124 and outer fluid passage 134 may contain a fluid, such as lubricant, oil, fuel, air or other fluid. Inner fluid passage 124 and outer fluid passage 134 may contain similar or different fluids, which may have similar or different temperatures and/or pressures.

An inner surface 120 of first tube 112 may define a first fluid path 140 through inner fluid passage 124. Outer surface 122 of first tube 112 and an inner surface 130 of second tube 114 may define a second fluid path 142 through outer fluid passage 134. First fluid path 140 and second fluid path 142 are each illustrated as flowing in the negative A-direction on the provided ABC axes. It is further contemplated and understood that first fluid path 140 and/or second fluid path 142 may flow in various directions, including the positive A-direction, in accordance with various embodiments. As used herein, "distal" refers to the direction toward the negative A-direction on the provided ABC axes relative to the multiwall tubing assembly 110. As used herein, "proximal" refers to a direction toward the positive A-direction on the provided ABC axes relative to the multiwall tubing assembly 110.

Third tube 118 may include an inner surface 144 and an outer surface 146. An inner surface 144 of third tube 118 and outer surface 132 of second tube 114 may define a gap or a chamber 148. Chamber 148 may be occupied by air, thereby providing a thermal shield for first tube 112 and second tube 114 to reduce heat transfer from surrounding hot air to first fluid path 140 and second fluid path 142. Chamber 148 may further be configured to contain oil or other fluid within third tube 118 in the event that there is a fluid leak from first tube 112 and/or second tube 114.

In various embodiments, multiwall tubing assembly 110 may comprise fitting 89 configured to couple to second tube 114 and third tube 118 to bearing housing 78. More specifically, fitting 89 may be configured to couple to a distal end 136 of second tube 114 and to a distal end 149 of third tube 118. Distal end 136 of second tube 114 and distal end 149 of third tube 118 may be mechanically fastened, welded, brazed, adhered and/or otherwise attached to fitting 89. Fitting 89 may be coupled to or integral with second tube 114 and/or third tube 118. As used herein, the term "integrated" or "integral" may include being formed as one, single continuous piece. Fitting 89 may further include a flange 139 extending radially outward from longitudinal axis A-A'. One or more fasteners 90 may extend through flange 139 to secure fitting 89 to bearing housing 78. Fitting 89 may further be configured to couple second tube 114 to fitting 150.

Fitting 150 may be configured to couple to both first tube 112 and fitting 89 of multiwall tubing assembly 110. More specifically, fitting 150 may be configured to couple to a distal end 126 of first tube 112 and to a distal end 138 of fitting 89. Fitting 150 may comprise a proximal end 152 and a distal end 154 opposite to the proximal end 152. Proximal end 152 of fitting 150 may further include an inner proximal end 156 and an outer proximal end 158. Inner proximal end 156 of fitting 150 may be configured to couple to distal end 126 of first tube 112, and may form a seal between inner proximal end 156 of fitting 150 and first tube 112. Distal end 126 of first tube 112 may be mechanically fastened, welded, brazed, adhered and/or otherwise attached to inner proximal end 156 of fitting 150. Fitting 150 may define an inner fluid passage 160, which forms a continuous fluid path with inner fluid passage 124 of first tube 112. Distal end 154 of fitting 150 may be configured to couple to bearing housing 78 configured to receive fluid from first fluid path 140.

In various embodiments, a first seal 166 may be disposed between distal end 154 of fitting 150 and bearing housing 78. First seal 166 may be configured to provide a fluid-tight seal between fitting 150 and bearing housing 78. First seal 166 may be disposed at an outlet of fitting 150 and may be disposed between the first fluid path 140 and the second fluid path 142. First seal 166 may include, for example, a C-seal, brush seal, carbon seal, O-ring seal or other seal type. In this regard, a C-seal may have a cross-sectional shape that is partially circular. First seal 166 may provide sealing around a circumference of distal end 154 of fitting 150.

Outer proximal end 158 of fitting 150 may be configured to couple to distal end 138 of fitting 89, and may form a seal between fitting 150 and fitting 89. Outer proximal end 158 of fitting 150 may be mechanically fastened, welded, brazed, adhered and/or otherwise attached to distal end 138 of fitting 89. In various embodiments, outer proximal end 158 of fitting 150 may be configured to couple to distal end 136 of second tube 114. Fitting 150 may define an outer fluid passage 162, which forms a continuous fluid path with outer fluid passage 134 of second tube 114. First seal 166 between fitting 150 and bearing housing 78 may help maintain fluid isolation of inner fluid passage 160 relative to outer fluid passage 162. Fitting 150 may further be configured to maintain a position of first tube 112 with respect to fitting 89 and/or second tube 114, for example, to hold first tube 112 in a fixed position relative to fitting 89 and/or second tube 114. Thus, fitting 150 may provide structural support for the first tube 112, fitting 89 and/or second tube 114.

In various embodiments, additional seals, such as second seal 167 and third seal 168, may be disposed between fitting 89 and bearing housing 78. Second seal 167 and third seal 168 may be configured to provide a fluid-tight seal between fitting 89 and bearing housing 78. Second seal 167 and third seal 168 may each include, for example, a C-seal, brush seal, carbon seal, O-ring seal or other seal type.

Referring to FIG. 4B, a portion of a multiwall tubing assembly 110 is shown, in accordance with various embodiments. As discussed above, fitting 150 may be configured to couple to first tube 112 and second tube 114 to receive fluid from each fluid passage of the first tube 112 and second tube 114. Fitting 150 may maintain first fluid path 140 separate and fluidly isolated from second fluid path 142. As discussed, distal end 154 of fitting 150 may be configured to couple to additional tubing configured to receive fluid from inner fluid passage 160. Fitting 150 may define an outer fluid passage 162 through which second fluid path 142 flows and exits fitting 150 through one or more apertures 164 in fitting 150. Fitting 150 may further couple to additional fittings, tubing or components configured to receive fluid from outer fluid passage 162. Thus, fitting 150 operates as a coupling for a multiwall tube 116 and maintains two separate flow paths, such as first fluid path 140 and second fluid path 142.

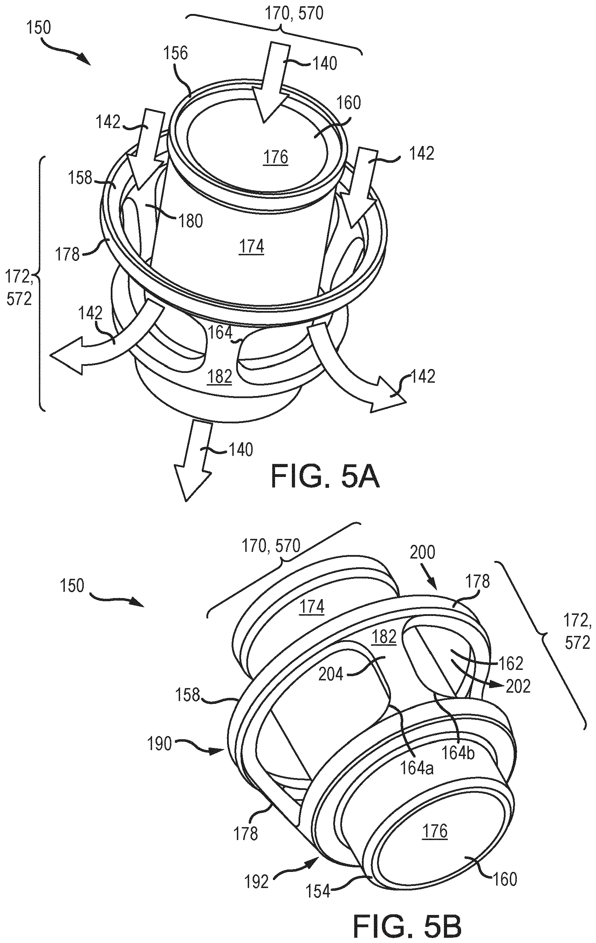

Referring to FIGS. 5A and 5B, a fitting 150 for a multiwall tubing assembly is shown. In various embodiments, fitting 150 may include an inner portion 170 and an outer portion 172. Inner portion 170 may comprise a tubular portion 570, and outer portion 172 may comprise a frustoconical portion 572. The outer portion 172 may be disposed around an outer surface 174 of the inner portion 170 and may be concentrically oriented relative to the inner portion 170. Inner portion 170 may include an inner surface 176 and an outer surface 174. Inner fluid passage 160 may be defined by an inner surface 176 of inner portion 170. Outer portion 172 may include an inner surface 180 and an outer surface 182. Outer fluid passage 162 may be defined between the outer portion 172 and the inner portion 170, and more specifically, outer fluid passage 162 may be defined by outer surface 174 of inner portion 170 and inner surface 180 of outer portion 172. Outer fluid passage 162 may be concentric with inner fluid passage 160 and may be fluidly isolated from inner fluid passage 160.

Outer portion 172 further includes a first axial end 190 and a second axial end 192. The second axial end 192 of outer portion 172 may be coupled to outer surface 174 of inner portion 170. Second axial end 192 may be integral with outer surface 174 such that outer portion 172 and inner portion 170 are integrally formed. The first axial end 190 of outer portion 172 may be radially offset from inner portion 170 so as to form an inlet 200 of outer fluid passage 162. Inlet 200 may be an annular inlet.

In various embodiments, outer portion 172 may define one or more apertures 164 formed through a sidewall 178 of outer portion 172. One or more apertures 164 disposed through a sidewall 178 of outer portion 172 extend from inner surface 180 to outer surface 182 of outer portion 172. The apertures 164 may form an outlet 202 of outer fluid passage 162 allowing second fluid path 142 to exit fitting 150 without mixing with first fluid path 140. Apertures 164 may have a trapezoidal shape, a partial annular shape, a circular shape, an oval shape or any suitable shape. FIG. 5B shows fitting 150 with outer portion 172 as frustoconical portion 572 having a first aperture 164a and a second aperture 164b separated by a prong 204 of sidewall 178. Prong 204 of sidewall 178 may be disposed between first aperture 164a and second aperture 164b and may be coupled to the first axial end 190 and the second axial end 192 of outer portion 172.

Referring again to FIGS. 2 and 4A and still to FIGS. 5A and 5B, fitting 150 may be used to couple to a multiwall tube 116 and to a bearing system 38 for delivering fluid to the bearing system 38, in accordance with various embodiments. Fitting 150 may be coupled to bearing housing 78 and to first tube 112 and second tube 114. Inner portion 170 of fitting 150 may be fluidly coupled to the inner fluid passage 124 of multiwall tube 116 and may be configured to carry the first fluid 92 to bearing system 38. Outer portion 172 of fitting 150 may be may be disposed around inner portion 170 and fluidly coupled to the outer fluid passage 134 of multiwall tube 116. Outer portion 172 may be configured to carry the second fluid 96 to bearing system 38. Fitting 150 may be configured to couple to bearing housing 78 of the bearing system 38 with the inner fluid passage 124 in fluid communication with bearing damper path 84 defined by the bearing housing 78. The outer fluid passage 162 may be in fluid communication with bearing compartment path 88 defined by the bearing housing 78.

Referring now to FIG. 3 and still to FIGS. 5A and 5B, fitting 150 may receive the first fluid 92 from first fluid path 140 and the second fluid 96 from second fluid path 142. The first fluid 92 may have similar or different characteristics from the second fluid 96. For example, the first fluid 92 of first fluid path 140 may have a higher pressure than the second fluid 96 of second fluid path 142. The first fluid 92 of first fluid path 140 may also have a higher temperature than the second fluid 96 of second fluid path 142. Fitting 150 may be any suitable material for the thermal environment encountered by the fitting 150, including for example a metallic and/or non-metallic material.

In various embodiments, fitting 150 may also be configured to minimize thermal load transfer between first tube 112 and second tube 114. Prongs 204 of outer portion 172 may be configured to reduce conductive heat transfer between first tube 112 and second tube 114. For example, a width of prongs 204 may be less than a width of apertures 164 in order to minimize the material that couples second tube 114 to inner portion 170. By forming prongs 204 with a relatively thin shape, the heat transfer between first axial end 190 and second axial end 192 of outer portion 172, and thus the heat transfer between first tube 112 and second tube 114, may be reduced.

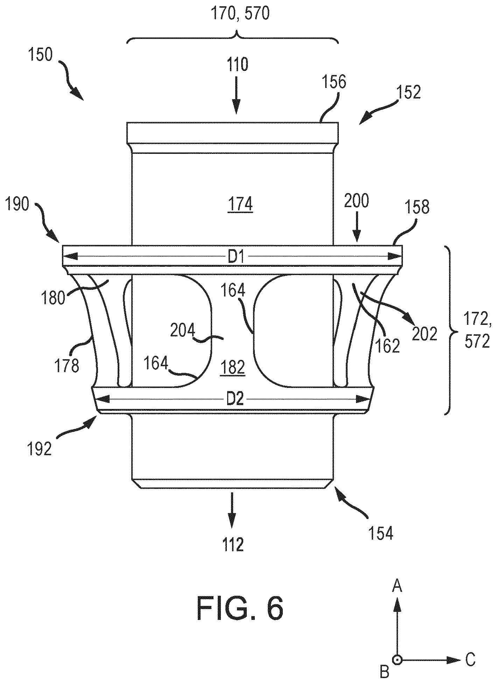

Referring to FIG. 6, a side view of fitting 150 is shown, in accordance with various embodiments. As discussed, fitting 150 may include an outer portion 172 formed concentrically around outer surface 174 of inner portion 170. Inner portion 170 and outer portion 172 may be integrally formed. A diameter D1 of the first axial end 190 of outer portion 172 may be greater than a diameter D2 of the second axial end 192 of outer portion 172. The first axial end 190 of outer portion 172 may be radially offset from outer surface 174 of inner portion 170. The second axial end 192 of outer portion 172 may be coupled to or formed integrally with the outer surface 174 of inner portion 170. A difference between the diameter D1 of the first axial end 190 and the diameter D2 of the second axial end 192 may determine the sidewall angle of outer portion 172. The sidewall angle of outer portion 172 and size of apertures 164 may be configured to minimize pressure loss in the fluid within outer fluid passage 162.

With continued reference to FIG. 6 and with reference to FIG. 4A, outer fluid passage 162 of fitting 150 may comprise inlet 200 and outlet 202. Inlet 200 may be in fluid communication with the second fluid path 142. The inlet 200 of outer fluid passage 162 formed between inner portion 170 and first axial end 190 of outer portion 172 may be similar in size and shape to outer fluid passage 134 of multiwall tube 116. Fitting 150 may define a plurality of apertures 164 disposed through a sidewall 178 of the fitting 150. Apertures 164 may form outlet 202 for the second fluid path 142 to exit fitting 150. The shape and size of apertures 164 may be configured to provide a large cross sectional surface area at outlet 202 of outer fluid passage 162. The shape of outer portion 172 and apertures 164 may allow fluid to flow from outer fluid passage 134 of multiwall tube 116 and through outer fluid passage 162 of fitting 150 with minimal fluid pressure loss. As fluid flows from inlet 200 and in the negative A-direction through outer fluid passage 162, the frustoconical shape allows fluid to exit through apertures 164 with reduced impingement of the fluid on inner surface 180 of outer portion 172. By minimizing impingement of fluid flow on outer portion 172, pressure loss is reduced.

Inner portion 170 may comprise an inlet 210 and an outlet 212. Inlet 210 may be in fluid communication with the first fluid path 140. Inlet 210 may have a similar cross-sectional size and shape as inner fluid passage 124 of multiwall tube 116. Second fluid path 142 may be concentric with the first fluid path 140, and inlet 200 may be concentric with inlet 210. Outlet 212 at distal end 154 of fitting 150 may be configured according to the component to be coupled to distal end 154 of fitting 150.

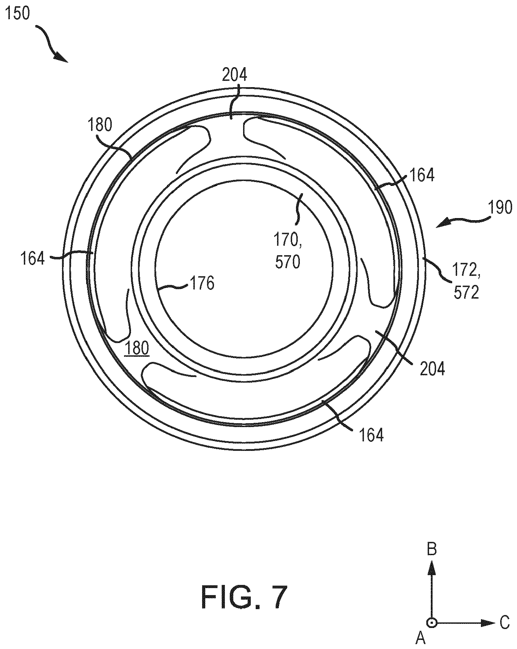

Referring to FIG. 7, a top view of fitting 150 is shown. As discussed above, the shape of outer portion 172 as frustoconical portion 572 may reduce impingement of fluid on inner surface 180 of outer portion 172. Apertures 164 are separated by prongs 204, which are shown having a relatively smaller surface area than an area of apertures 164. By minimizing the surface area of inner surface 180, fluid pressure loss due to fluid impingement on inner surface 180 may be reduced and conductive heat transfer between first axial end 190 of outer portion 172 and inner portion 170 may be reduced.

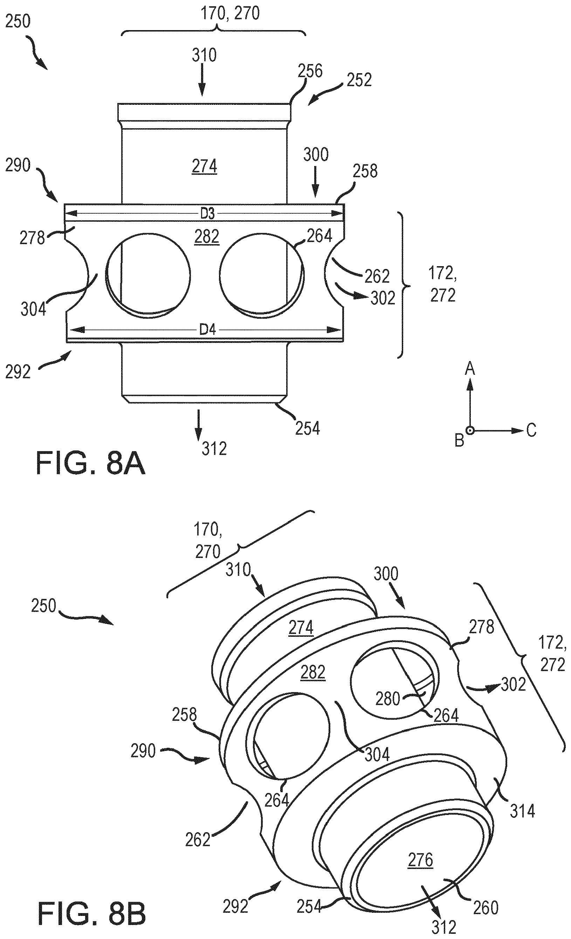

Referring to FIGS. 8A and 8B, a fitting 250 for a multiwall tube is shown. Fitting 250 may comprise a proximal end 252 and a distal end 254. Proximal end 252 of fitting 250 may further include an inner proximal end 256 and an outer proximal end 258. Similar to fitting 150 (FIG. 5A), fitting 250 may be used to couple to a multiwall tube 116 (FIG. 4A). In various embodiments, fitting 250 may include an inner portion 170 and an outer portion 172. Inner portion 170 may comprise a first tubular portion 270, and outer portion 172 may comprise a second tubular portion 272. The outer portion 172 may be disposed around an outer surface 274 of the inner portion 170 and may be concentrically oriented relative to the inner portion 170. Fitting 250 may define an inner fluid passage 260 and an outer fluid passage 262. Inner fluid passage 260 may be defined by an inner surface 276 of inner portion 170. Inner portion 170 may comprise an inlet 310 and an outlet 312 for inner fluid passage 260. Distal end 254 of fitting 250 may be configured to couple to additional tubing configured to receive fluid from inner fluid passage 260.

Outer portion 172 may include an inner surface 280 and an outer surface 282. Outer fluid passage 262 may be defined between the outer portion 172 and the inner portion 170, and more specifically, outer fluid passage 262 may be defined by outer surface 274 of inner portion 170 and inner surface 280 of outer portion 172. Outer fluid passage 262 may be concentric with inner fluid passage 260 and may be fluidly isolated from inner fluid passage 260. Outer portion 172 further includes a first axial end 290 and a second axial end 292. Second axial end 292 of outer portion 172 may be coupled to outer surface 274 of inner portion 170. Second axial end 292 may be integral with outer surface 274 such that outer portion 172 and inner portion 170 are integrally formed. First axial end 290 of outer portion 172 may be radially offset from outer surface 274 of inner portion 170 so as to form an inlet 300 of outer fluid passage 262. Inlet 300 may be an annular inlet and concentric with inlet 310. Second axial end 292 may be radially offset from outer surface 274 of inner portion 170, and may be coupled to outer surface 274 by a base wall 314. A diameter D3 of first axial end 290 of outer portion 172 may be the same or similar to a diameter D4 of second axial end 292 of outer portion 172, such that a sidewall 278 of outer portion 172 is parallel to inner portion 170.

In various embodiments, outer portion 172 may define one or more apertures 264 formed through sidewall 278 of outer portion 172. One or more apertures 264 disposed through sidewall 278 of outer portion 172 extend from inner surface 280 to outer surface 282 of outer portion 172. The apertures 264 may form an outlet 302 of outer fluid passage 262 allowing fluid to exit fitting 250 without mixing with fluid flowing through outlet 312. Apertures 264 may have a trapezoidal shape, a partial annular shape, a circular shape, an oval shape or any suitable shape. Apertures 264 may be separated by a prong 304 of sidewall 278.

In various embodiments, fitting 250 may also be configured to minimize thermal load transfer between inner portion 170 and outer portion 172. Prongs 304 of outer portion 172 may be configured to reduce conductive heat transfer between inner portion 170 and outer portion 172. For example, a width of prongs 304 may be less than a width of apertures 264 in order to minimize the material of outer portion 172. By forming prongs 304 with a relatively thin shape, the heat transfer between inner portion 170 and outer portion 172 may be reduced. The shape and size of apertures 264 may be configured to provide a large cross sectional surface area at outlet 302 of outer fluid passage 362. Apertures 264 may allow fluid to flow through outer fluid passage 262 of fitting 250 with minimal fluid pressure loss.

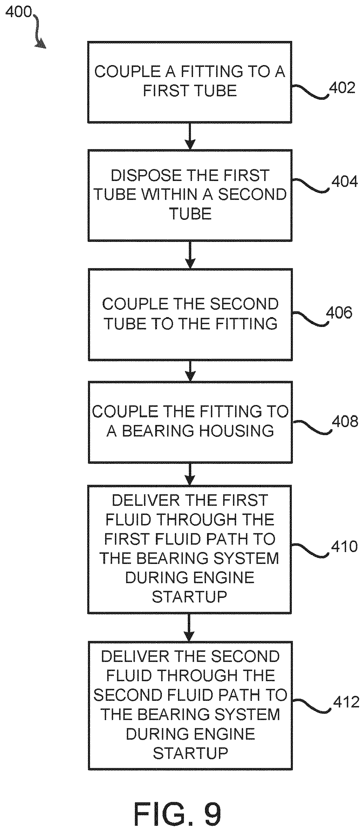

With reference to FIG. 9, a method 400 of delivering lubricant to a bearing system is shown, in accordance with various embodiments. Method 400 may comprise the step of coupling a fitting to a first tube (step 402). The first tube may define a first fluid path. Method 400 may comprise the step of disposing the first tube within a second tube (step 404). The first tube and the second tube may define a second fluid path between the first tube and the second tube. Method 400 may comprise the step of coupling the second tube to the fitting (step 406). The fitting may be configured to fluidly isolate a second fluid in the second fluid path from a first fluid in the first fluid path. Method 400 may comprise the steps of coupling the fitting to a bearing housing (step 408), delivering the first fluid through the first fluid path to the bearing system during engine startup (step 410), and delivering the second fluid through the second fluid path to the bearing system during engine startup (step 412). The first fluid path may be in fluid communication with a bearing damper path defined by the bearing housing. A pressure of the first fluid during engine startup may be greater than a pressure of the second fluid during engine startup. A pressure of the first fluid and a pressure of the second fluid may be substantially the same after engine startup. Step 410 may further comprise delivering the first fluid to a bearing damper. Step 412 may further comprise delivering the second fluid to a bearing compartment.

Benefits and other advantages have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, and any elements that may cause any benefit or advantage to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C.

## Claims

1. A multiwall tubing assembly (110) for fluid delivery to a bearing system (38), comprising:
a first tube (112) defining an inner fluid passage (124) configured to carry a first fluid;
a second tube (114) disposed around the first tube (112) and defining an outer fluid passage (134) between the first tube (112) and the second tube (114), the outer fluid passage (134) configured to carry a second fluid; and
a fitting (150) coupled to the first tube (112) and the second tube (114), the fitting (150) comprising:
an inner portion (170) fluidly coupled to the inner fluid passage (124) and configured to carry the first fluid, and
an outer portion (172) disposed around the inner portion (170) and fluidly coupled to the outer fluid passage (134), the outer portion (172) configured to carry the second fluid,
wherein the fitting (150) is configured to fluidly isolate the first fluid from the second fluid,
**characterised in that** the multiwall tubing assembly (110) further comprises a third tube (118) disposed around the second tube (114) and defining a chamber (148) between the second tube (114) and the third tube (118).

2. The multiwall tubing assembly (110) of claim 1, wherein the fitting (150) is configured to couple to a bearing housing (78) of the bearing system (38) with the inner fluid passage (124) in fluid communication with a bearing damper path (84) defined by the bearing housing (78), and with the outer fluid passage (134) in fluid communication with a bearing compartment path (88) defined by the bearing housing (78).

3. The multiwall tubing assembly (110) of claim 2, wherein a pressure of the first fluid is greater than a pressure of the second fluid.

4. A mid-turbine frame (57) for a gas turbine engine (20), comprising:
a bearing system (38) including a bearing housing (78); and
a multiwall tubing assembly (110) as claimed in claim 1,
wherein the inner fluid passage (124) is configured to carry the first fluid to the bearing system (38),
wherein the outer fluid passage (134) is configured to carry the second fluid to the bearing system (38),
wherein the fitting (150) is coupled to the bearing housing (78),
wherein the inner portion (170) is configured to carry the first fluid to the bearing system (38), and
wherein the outer portion (172) is configured to carry the second fluid to the bearing system (38).

5. The multiwall tubing assembly (110) of any of claims 1 to 3, or the mid-turbine frame (57) of claim 4, wherein the outer fluid passage (134) is concentric with the inner fluid passage (124).

6. The mid-turbine frame (57) of claim 4 or 5, wherein the bearing system (38) further comprises a bearing damper (76) and a bearing chamber (80), and wherein the bearing housing (78) defines a bearing damper path (84) and a bearing chamber path (88).

7. The mid-turbine frame (57) of claim 6, wherein the inner fluid passage (124) is in fluid communication with the bearing damper path (84), and wherein the outer fluid passage (134) is in fluid communication with the bearing chamber path (88).

8. The multiwall tubing assembly (110) of any of claims 1, 2, 3 or 5, or the mid-turbine frame (57) of any of claims 4 to 7, wherein the outer portion (172) of the fitting (150) defines an aperture (164) disposed through a sidewall (178) of the outer portion (172).

9. The multiwall tubing assembly (110) of any of claims 1 to 3, 5 or 8, or the mid-turbine frame (57) of any of claims 4 to 8, wherein the outer portion (172) of the fitting (150) comprises a frustoconical portion (572), and wherein the inner portion (170) of the fitting (150) comprises a tubular portion (570).

10. The mid-turbine frame (57) of any of claims 4 to 9, further comprising a seal (166) disposed between the bearing housing (78) and the fitting (150), the seal (166) configured to maintain fluid isolation of the first fluid from the second fluid.

11. A method of delivering lubricant to a bearing system (38), comprising:
coupling a fitting (150) to a first tube (112), wherein the first tube (112) defines a first fluid path;
disposing the first tube (112) within a second tube (114), wherein the first tube (112) and the second tube (114) define a second fluid path between the first tube (112) and the second tube (114);
coupling the second tube (114) to the fitting (150), wherein the fitting (150) is configured to fluidly isolate a second fluid in the second fluid path from a first fluid in the first fluid path; and
delivering the first fluid through the first fluid path to the bearing system (38) during engine startup,
**characterised in that** a third tube (118) is disposed around the second tube (114) and defines a chamber (148) between the second tube (114) and the third tube (118).

12. The method of claim 11, further comprising delivering the second fluid through the second fluid path to the bearing system (38) during engine startup, wherein a pressure of the first fluid during engine startup is greater than a pressure of the second fluid during engine startup.

13. The method of claim 11 or 12, further comprising coupling the fitting (150) to a bearing housing (78), wherein the first fluid path is in fluid communication with a bearing damper path (84) defined by the bearing housing (78), and wherein the second fluid path is in fluid communication with a bearing compartment path (88) defined by the bearing housing (78).

14. The method of claim 13, wherein the delivering the first fluid further comprises delivering the first fluid to a bearing damper (76).

15. The method of claim 14, wherein the delivering the second fluid further comprises delivering the second fluid to a bearing compartment.

## Patentansprüche

1. Mehrwandige Rohrbaugruppe (110), für eine Fluidversorgung eines Lagersystems (38), umfassend:
ein erstes Rohr (112), welches einen inneren Fluiddurchgang (124) definiert, welcher dazu konfiguriert ist, ein erstes Fluid zu befördern;
ein zweites Rohr (114), welches um das erste Rohr (112) angeordnet ist und einen äußeren Fluiddurchgang (134) zwischen dem ersten Rohr (112) und dem zweiten Rohr (114) definiert, wobei der äußere Fluiddurchgang (134) dazu konfiguriert ist, ein zweites Fluid zu befördern; und
ein Anschlussstück (150), welches an das erste Rohr (112) und das zweite Rohr (114) gekoppelt ist, wobei das Anschlussstück (150) Folgendes umfasst:
einen inneren Teil (170), welcher fluidisch an den inneren Fluiddurchgang (124) gekoppelt ist und dazu konfiguriert ist, das erste Fluid zu befördern, und
einen äußeren Teil (172), welcher um den inneren Teil (170) angeordnet ist und fluidisch an den äußeren Fluiddurchgang (134) gekoppelt ist, wobei der äußere Teil (172) dazu konfiguriert ist, das zweite Fluid zu befördern,
wobei das Anschlussstück (150) dazu konfiguriert ist, das erste Fluid von dem zweiten Fluid fluidisch zu isolieren,
**dadurch gekennzeichnet, dass** die mehrwandige Rohrbaugruppe (110) ferner ein drittes Rohr (118) umfasst, welches um das zweite Rohr (114) angeordnet ist und eine Kammer (148) zwischen dem zweiten Rohr (114) und dem dritten Rohr (118) definiert.

2. Mehrwandige Rohrbaugruppe (110) nach Anspruch 1, wobei das Anschlussstück (150) dazu konfiguriert ist, sich an ein Lagergehäuse (78) des Lagersystems (38) zu koppeln, wobei der innere Fluiddurchgang (124) in Fluidkommunikation mit einem Lagerdämpferweg (84) steht, welcher durch das Lagergehäuse (78) definiert ist, und wobei der äußere Fluiddurchgang (134) in Fluidkommunikation mit einem Lagerkammerweg (88) steht, welcher durch das Lagergehäuse (78) definiert ist.

3. Mehrwandige Rohrbaugruppe (110) nach Anspruch 2, wobei ein Druck des ersten Fluids größer als ein Druck des zweiten Fluids ist.

4. Mittelturbinenrahmen (57) für ein Gasturbinentriebwerk (20), umfassend:
ein Lagersystem (38), welches ein Lagergehäuse (78) beinhaltet; und
eine mehrwandige Rohrbaugruppe (110) nach Anspruch 1,
wobei der innere Fluiddurchgang (124) dazu konfiguriert ist, das erste Fluid zu dem Lagersystem (38) zu befördern,
wobei der äußere Fluiddurchgang (134) dazu konfiguriert ist, das zweite Fluid zu dem Lagersystem (38) zu befördern,
wobei das Anschlussstück (150) an das Lagergehäuse (78) gekoppelt ist,
wobei der innere Teil (170) dazu konfiguriert ist, das erste Fluid zu dem Lagersystem (38) zu befördern, und
wobei der äußere Teil (172) dazu konfiguriert ist, das zweite Fluid zu dem Lagersystem (38) zu befördern.

5. Mehrwandige Rohrbaugruppe (110) nach einem der Ansprüche 1 bis 3, oder Mittelturbinenrahmen (57) nach Anspruch 4, wobei der äußere Fluiddurchgang (134) konzentrisch zu dem inneren Fluiddurchgang (124) ist.

6. Mittelturbinenrahmen (57) nach Anspruch 4 oder 5, wobei das Lagersystem (38) ferner einen Lagerdämpfer (76) und eine Lagerkammer (80) umfasst, und wobei das Lagergehäuse (78) einen Lagerdämpferweg (84) und einen Lagerkammerweg (88) definiert.

7. Mittelturbinenrahmen (57) nach Anspruch 6, wobei der innere Fluiddurchgang (124) in Fluidkommunikation mit dem Lagerdämpferweg (84) steht und wobei der äußere Fluiddurchgang (134) in Fluidkommunikation mit dem Lagerkammerweg (88) steht.

8. Mehrwandige Rohrbaugruppe (110) nach einem der Ansprüche 1, 2, 3 oder 5, oder Mittelturbinenrahmen (57) nach einem der Ansprüche 4 bis 7, wobei der äußere Teil (172) des Anschlussstücks (150) eine Öffnung (164) definiert, welche durch eine Seitenwand (178) des äußeren Teils (172) angeordnet ist.

9. Mehrwandige Rohrbaugruppe (110) nach einem der Ansprüche 1 bis 3, 5 oder 8, oder Mittelturbinenrahmen (57) nach einem der Ansprüche 4 bis 8, wobei der äußere Teil (172) des Anschlussstücks (150) einen kegelstumpfförmigen Teil (572) umfasst, und wobei der innere Teil (170) des Anschlussstücks (150) einen röhrenförmigen Teil (570) umfasst.

10. Mittelturbinenrahmen (57) nach einem der Ansprüche 4 bis 9, ferner umfassend eine Dichtung (166), welche zwischen dem Lagergehäuse (78) und dem Anschlussstück (150) angeordnet ist, wobei die Dichtung (166) dazu konfiguriert ist, eine Fluidisolation des ersten Fluids von dem zweiten Fluid zu erhalten.

11. Verfahren zum Versorgen eines Lagersystems (38) mit Schmiermittel, umfassend:
Koppeln eines Anschlussstücks (150) an ein erstes Rohr (112), wobei das erste Rohr (112) einen ersten Fluidweg definiert;
Anordnen des ersten Rohrs (112) in einem zweiten Rohr (114), wobei das erste Rohr (112) und das zweite Rohr (114) einen zweiten Fluidweg zwischen dem ersten Rohr (112) und dem zweiten Rohr (114) definieren;
Koppeln des zweiten Rohrs (114) an das Anschlussstück (150), wobei das Anschlussstück (150) dazu konfiguriert ist, ein zweites Fluid in dem zweiten Fluidweg von einem ersten Fluid in dem ersten Fluidweg fluidisch zu isolieren; und
Versorgen des Lagersystems (38) mit dem ersten Fluid durch den ersten Fluidweg während des Starts des Triebwerks,
**dadurch gekennzeichnet, dass** ein drittes Rohr (118) um das zweite Rohr (114) angeordnet ist und eine Kammer (148) zwischen dem zweiten Rohr (114) und dem dritten Rohr (118) definiert

12. Verfahren nach Anspruch 11, ferner umfassend ein Versorgen des Lagersystems (38) mit dem zweiten Fluid durch den zweiten Fluidweg während des Starts des Triebwerks, wobei ein Druck des ersten Fluids während des Starts des Triebwerks größer ist als ein Druck des zweiten Fluids während des Starts des Triebwerks.

13. Verfahren nach Anspruch 11 oder 12, ferner umfassend ein Koppeln des Anschlussstücks (150) an ein Lagergehäuse (78), wobei der erste Fluidweg in Fluidkommunikation mit einem Lagerdämpferweg steht, welcher durch das Lagergehäuse (78) definiert ist, und wobei der zweite Fluidweg in Fluidkommunikation mit einem Lagerkammerweg (88) steht, welcher durch das Lagergehäuse (78) definiert ist.

14. Verfahren nach Anspruch 13, wobei das Versorgen mit dem ersten Fluid ferner ein Versorgen eines Lagerdämpfers (76) mit dem ersten Fluid umfasst.

15. Verfahren nach Anspruch 14, wobei das Versorgen mit dem zweiten Fluid ferner ein Versorgen einer Lagerkammer mit dem zweiten Fluid umfasst.

## Revendications

1. Ensemble tube à parois multiples (110) pour la distribution de fluide à un système de palier (38), comprenant :
un premier tube (112) définissant un passage de fluide interne (124) conçu pour transporter un premier fluide ;
un deuxième tube (114) disposé autour du premier tube (112) et définissant un passage de fluide externe (134) entre le premier tube (112) et le deuxième tube (114), le passage de fluide externe (134) étant conçu pour transporter un second fluide ; et
un raccord (150) couplé au premier tube (112) et au deuxième tube (114), le raccord (150) comprenant :
une partie interne (170) couplée fluidiquement au passage de fluide interne (124) et conçue pour transporter le premier fluide, et
une partie externe (172) disposée autour de la partie interne (170) et couplée fluidiquement au passage de fluide externe (134), la partie externe (172) étant conçue pour transporter le second fluide,
dans lequel le raccord (150) est conçu pour isoler fluidiquement le premier fluide par rapport au second fluide,
**caractérisé en ce que** l'ensemble tube à parois multiples (110) comprend en outre un troisième tube (118) disposé autour du deuxième tube (114) et définissant une chambre (148) entre le deuxième tube (114) et le troisième tube (118).

2. Ensemble tube à parois multiples (110) selon la revendication 1, dans lequel le raccord (150) est conçu pour se coupler à un logement de palier (78) du système de palier (38) avec le passage de fluide interne (124) en communication fluidique avec un trajet d'amortisseur de palier (84) défini par le logement de palier (78), et avec le passage de fluide externe (134) en communication fluidique avec un trajet de compartiment de palier (88) défini par le logement de palier (78).

3. Ensemble tube à parois multiples (110) selon la revendication 2, dans lequel une pression du premier fluide est supérieure à une pression du second fluide.

4. Cadre de turbine intermédiaire (57) pour un moteur à turbine à gaz (20), comprenant :
un système de palier (38) comportant un logement de palier (78) ; et
un ensemble tube à parois multiples (110) selon la revendication 1,
dans lequel le passage de fluide interne (124) est conçu pour transporter le premier fluide vers le système de palier (38),
dans lequel le passage de fluide externe (134) est conçu pour transporter le second fluide vers le système de palier (38),
dans lequel le raccord (150) est couplé au logement de palier (78),
dans lequel la partie interne (170) est conçue pour transporter le premier fluide vers le système de palier (38), et
dans lequel la partie externe (172) est conçue pour transporter le second fluide vers le système de palier (38).

5. Ensemble tube à parois multiples (110) selon l'une quelconque des revendications 1 à 3, ou cadre de turbine intermédiaire (57) selon la revendication 4, dans lequel le passage de fluide externe (134) est concentrique avec le passage de fluide interne (124).

6. Cadre de turbine intermédiaire (57) selon la revendication 4 ou 5, dans lequel le système de palier (38) comprend en outre un amortisseur de palier (76) et une chambre de palier (80), et dans lequel le logement de palier (78) définit un trajet d'amortisseur de palier (84) et un trajet de chambre de palier (88).

7. Cadre de turbine intermédiaire (57) selon la revendication 6, dans lequel le passage de fluide interne (124) est en communication fluidique avec le trajet d'amortisseur de palier (84), et dans lequel le passage de fluide externe (134) est en communication fluidique avec le trajet de chambre de palier (88).

8. Ensemble tube à parois multiples (110) selon l'une quelconque des revendications 1, 2, 3 ou 5, ou cadre de turbine intermédiaire (57) selon l'une quelconque des revendications 4 à 7, dans lequel la partie externe (172) du raccord (150) définit une ouverture (164) disposée à travers une paroi latérale (178) de la partie externe (172).

9. Ensemble tube à parois multiples (110) selon l'une quelconque des revendications 1 à 3, 5 ou 8, ou cadre de turbine intermédiaire (57) selon l'une quelconque des revendications 4 à 8, dans lequel la partie externe (172) du raccord (150) comprend une partie tronconique (572), et dans lequel la partie interne (170) du raccord (150) comprend une partie tubulaire (570) .

10. Cadre de turbine intermédiaire (57) selon l'une quelconque des revendications 4 à 9, comprenant en outre un joint d'étanchéité (166) disposé entre le logement de palier (78) et le raccord (150), le joint d'étanchéité (166) étant conçu pour maintenir l'isolement fluidique du premier fluide par rapport au second fluide.

11. Procédé de distribution de lubrifiant à un système de palier (38), comprenant :
le couplage d'un raccord (150) à un premier tube (112), dans lequel le premier tube (112) définit un premier trajet de fluide ;
la disposition du premier tube (112) à l'intérieur d'un deuxième tube (114), dans lequel le premier tube (112) et le deuxième tube (114) définissent un second trajet de fluide entre le premier tube (112) et le deuxième tube (114) ;
le couplage du deuxième tube (114) au raccord (150), dans lequel le raccord (150) est conçu pour isoler fluidiquement un second fluide dans le second trajet de fluide par rapport à un premier fluide dans le premier trajet de fluide ; et
la distribution du premier fluide à travers le premier trajet de fluide au système de palier (38) pendant le démarrage du moteur,
**caractérisé en ce qu'**un troisième tube (118) est disposé autour du deuxième tube (114) et définit une chambre (148) entre le deuxième tube (114) et le troisième tube (118).

12. Procédé selon la revendication 11, comprenant en outre la distribution du second fluide à travers le second trajet de fluide au système de palier (38) pendant le démarrage du moteur, dans lequel une pression du premier fluide pendant le démarrage du moteur est supérieure à une pression du second fluide pendant le démarrage du moteur.

13. Procédé selon la revendication 11 ou 12, comprenant en outre le couplage du raccord (150) à un logement de palier (78), dans lequel le premier trajet de fluide est en communication fluidique avec un trajet d'amortisseur de palier (84) défini par le logement de palier (78), et dans lequel le second trajet de fluide est en communication fluidique avec un trajet de compartiment de palier (88) défini par le logement de palier (78).

14. Procédé selon la revendication 13, dans lequel la distribution du premier fluide comprend en outre la distribution du premier fluide à un amortisseur de palier (76).

15. Procédé selon la revendication 14, dans lequel la distribution du second fluide comprend en outre la distribution du second fluide à un compartiment de palier.
